# EUROPEAN PATENT SPECIFICATION

(11) **EP 2 283 997 B1**
(45) Date of publication and mention of the grant of the patent: **08.11.2017**
(21) Application number: 10382213.6
(22) Date of filing: 30.07.2010
(51) Int. Cl.: B29D 11/00

(54) **Die for manufacturing retroreflective material**
Düse zur Herstellung von retroreflektierendem Material
Matrice de formage de matériau rétroréflechissant

(30) Priority: 10.08.2009 ES 200930585
(43) Date of publication of application: 16.02.2011
(73) Proprietor: INDUSTRIAS SAMAR'T, S.A., 17600 Figueres (Gerona) (ES)
(72) Inventor: Sanchez Casadevall, Enrique, 17600 Figueres (ES); De Ciurana Gay, Joaquim, 17003 Girona (ES); Delgado Sanglas, Sr. Jordi, 08570, TORELLÓ (ES)
(74) Representative: Munoz Garcia, Antonio

(56) References cited:
- EP-A1- 1 965 232
- GB-A- 696 677
- GB-A- 1 272 068
- US-A- 5 138 488

## Description

### Object of the Invention

As expressed in the title of the present specification, the invention relates to a die for manufacturing retroreflective material having novelty features compared to what is already known in this field, which involve an improved industrial alternative.

More particularly, the object of the invention is focused on a die intended for manufacturing retroreflective material, i.e., material which reflects light maintaining the parallelism between the incident beam and the reflected beam, which has the particularity of having a surface the studied geometric design of which, formed by the combination of a plurality of particular cube corners, allows achieving said effect taking maximum advantage of the surface with a minimum depth and an optimal retroreflection.

### Field of Application of the Invention

The field of application of the present invention is aimed at the industry dedicated to manufacturing retroreflective material in general, the use of retroreflective material in the manufacture of license plates, road sign boards and similar elements being particularly noteworthy.

### Background of the Invention

As is known, retroreflection is the capacity of a surface to reflect light back towards the source, regardless of the angle of incidence thereof.

This is achieved in two ways, incorporating to the surface a layer of reflective spheres or spherical concavities, or providing it with a structure of cavities formed by small pyramids (corner reflection). A simple retroreflector consists of three mirrors arranged such that they are all perpendicular to one another, forming what is referred to as a cube corner.

In both cases, the structure of the surface reflects the light incident thereon and sends it directly towards the source, however, with the option of the spheres the retroreflection is not perfect and loses considerable definition, since the reflection surface in each sphere is not planar.

In addition, in the case of cube corners, the problem is considered that in order to be able to take maximum advantage of the surface and/or achieve an optimal retroreflection, the depth of the cube corner pyramidal hollows must be considerable and if this depth cannot be reached, effectiveness in the retroreflective effect is lost.

Therefore, the objective of the present invention is to provide the state of the art with a die which allows manufacturing materials with a retroreflective surface from cube corners the structural configuration of which allows an optimal retroreflection, taking maximum advantage of the surface, it having to be indicated that the applicant does not know of the existence of any other invention having similar structural and constitutive features.

Must be indicated as the closest documents from the state of the art, Patent document EP1965232A1 (NIPPON CARBIDE KOGYO KK [JP]) 3 September 2008 (03-09-2008), which discloses the preamble of claim 1, relating to a "Retroreflective article also comprising cube corners covering a die entirely without planar spaces between them and radially integrated in a pattern forming rosettes. However, unlike the present application, the reflectors and the pattern have a very different configuration that does not provide the same surfaces or perpendicularity between them

### Description of the Invention

Thus, the die for manufacturing retroreflective material proposed by the present invention is configured as an outstanding novelty within its field of application, since, according to its implementation, the objectives indicated above as suitable are satisfactorily reached, the characterizing details making it possible and distinguishing it from what is already known on the market being extensively developed below and suitably included in the final claims attached to the present specification.

Specifically, the invention proposes a die intended for manufacturing retroreflective material from a surface provided with cube corners, in which said cube corners have a geometry such that they cover it entirely without there being planar surface spaces between them, i.e., surface spaces not occupied by said cube corners and in which the retroreflective effect is optimal with a low depth thereof, as a result of their vertex being shifted towards a side with respect to their center in their longitudinal axis.

To that end, each of said cube corners is integrated in a standard unit which, radially grouped in sixes by means of the 60° rotation of the end of each one, form rosettes adjacently couplable to one another to cover the entire surface of the die without there being planar spaces between each cube corner.

Each of said standard units is in turn formed by a geometric hollow with a pentagonal base perimetric configuration which is formed by five faces with a different shape and orientation, three of them being the ones which comply with the requirement of perpendicularity to one another, oriented such that the normal vector of the surface is different, whereas the other two, abutting the edge of one of the previous ones, form the projection of the adjacent faces of the standard units of the contiguous rosettes.

The described die for manufacturing retroreflective material therefore represents an innovative structure with structural and constitutive features unknown up until now for such purpose, which reasons, added to its practical usefulness, provide it with sufficient grounds for obtaining the exclusivity privilege which is sought.

### Description of the Drawings

To complement the description which is being made and for the purpose of aiding to better understand the features of the invention, a set of drawings is attached to the present specification as an integral part thereof, in which the following has been depicted with an illustrative and nonlimiting character:
Figure 1 shows a plan view of a standard unit in which the cube corners incorporated by the surface of the die object of the invention are integrated, the base configuration thereof being seen therein.
Figure 2 shows a plan view of the rosettes forming the 60° rotated attachment of each group of six standard units and the form of coupling between contiguous rosettes, the attachments being contiguous rosettes having been emphasized therein with a thicker line stroke to favor a better interpretation of the invention.
Figure 3 shows a perspective view of a portion of the surface of the die, in which the configuration and arrangement of the assembly of cube corners forming it is seen, the attachments between contiguous rosettes having been emphasized therein, as in the previous figure, with a thicker line stroke.

### Preferred Embodiment of the Invention

In view of the mentioned figures, and according to the numbers adopted, an embodiment of the invention can be observed therein, which comprises the parts and elements indicated and described in detail below.

Thus, as observed in said figures, the die (1) in question is formed from a surface provided with cube corners (2), having the particularity that said cube corners (2) cover said surface entirely without there being planar surface spaces between them or surface spaces not occupied by said cube corners (2) and the depth of which is minimum given that their vertex (2a) is shifted towards a side with respect to their geometric center in their longitudinal axis.

To that end, each of said cube corners (2) is integrated in a standard unit (3) which, radially grouped in sixes by means of the 60° rotation of each one at the tip (3a) that they have, form rosettes (4) which can be adjacently couplable to one another and can cover the entire surface of the die (1) without there being planar spaces between each cube corner (2).

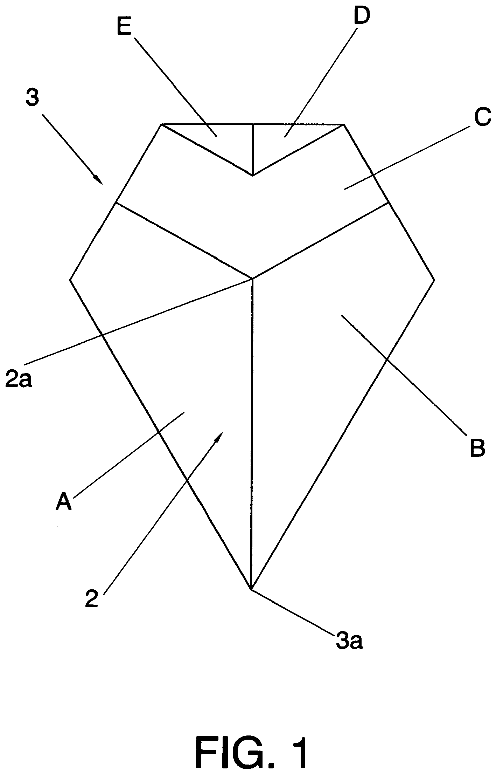

As can be seen in Figure 1, each of said standard units (3) is formed by a geometric hollow with an irregular pentagonal perimetric configuration having five faces (A, B, C, D, E) which are planar surfaces with a different shape and orientation, three of them (A, B and C) being the ones which comply with the requirement of perpendicularity to one another necessary for forming the cube corners (2), two of them, a first face being referenced as (A) and a second face as (B), being symmetrical to one another and having an elongated configuration to form the aforesaid tip (3a) of the standard unit (3), and the third face, referenced as (C), being symmetrical in itself and of a smaller size, whereby the point of attachment between the three, and therefore, the vertex (2a) of the cube corner (2) that they determine is shifted from the geometric center of the concavity that they form.

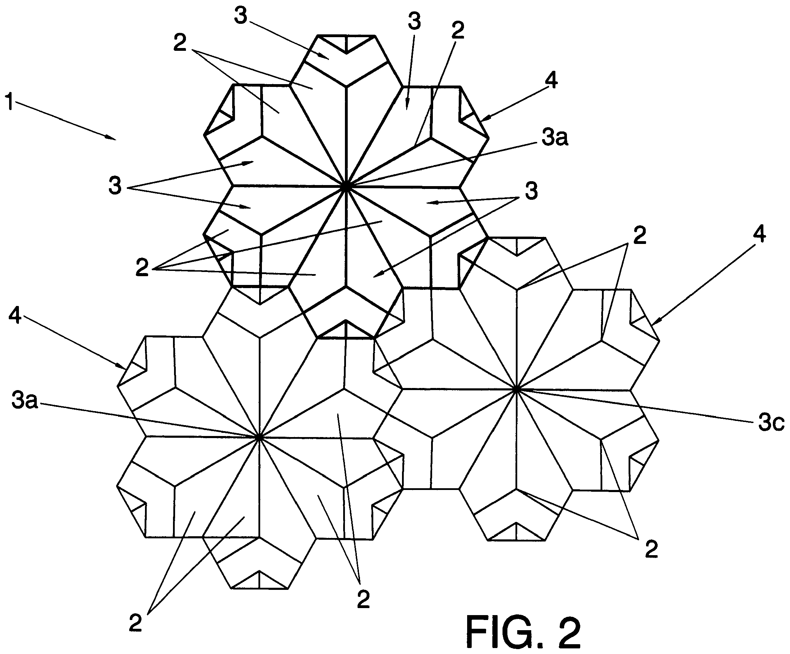

The remaining fourth (D) and fifth (E) faces are triangular and of a smaller size, being symmetrical and perpendicular to one another, and they abut the described third face (C) of those which comply with the requirement of perpendicularity, respectively forming the projection of the third (C) and first (A) faces of those of the standard units (3) of the adjacent rosettes (4), as is observed in Figure 2.

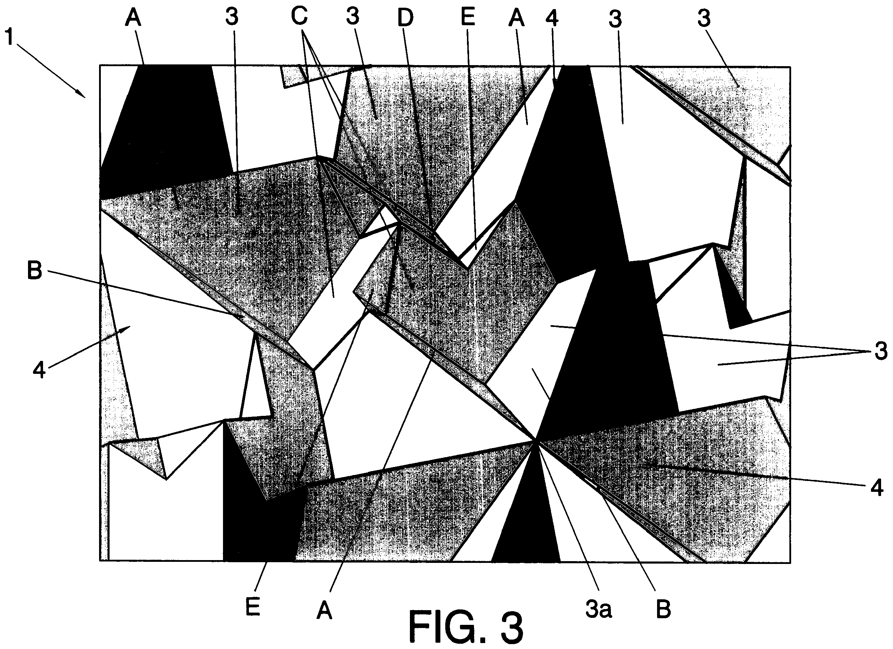

Considering Figure 3, the concavities forming each standard unit (3), the rosettes (4) and the way in which the latter are coupled to one another, there being no spaces between them which do not form cube corners (2), can be observed.

Having sufficiently described the nature of the present invention, as well as the way of putting it into practice, it is not considered necessary to further extend its description for any person skilled in the art to understand its scope and the advantages derived therefrom, stating that, within its essence, it can be put into practice in other embodiments which differ in detail from the one indicated by way of example, and which are also covered by the protection which is sought provided that its fundamental principle is not altered, changed or modified.

## Claims

1. A die for manufacturing retroreflective material, of the type formed from a surface provided with cube corners (2), such that it reflects light maintaining the parallelism between the incident beam and the reflected beam, where said cube corners (2) cover the surface of the die (1) entirely without there being planar surface spaces between them or surface spaces not occupied by said cube corners (2); where said cube corners (2) have their vertex (2a) shifted towards a side in their longitudinal axis with respect to their geometric center; and where each of the cube corners (2) is integrated in a standard unit (3) which, radially grouped in groups consisting of various numbers by means of the rotation of each unit at the tip (3a) that they have, form rosettes (4) which are adjacently coupled to one another covering the entire surface of the die (1) without there being planar spaces between each cube corner (2), **characterized in that** the rosettes (4) are formed by grouping standard units (3) in sixes, by means of the 60° rotation of each one at the tip (3a) ; and **in that** each standard unit (3) is formed by a geometric hollow with an irregular pentagonal perimetric configuration having five faces (A, B, C, D, E) which are planar surfaces with a different shape and orientation, three of them (A, B and C) being the ones which comply with the requirement of perpendicularity to one another, and the remaining fourth (D) and fifth (E) faces, abutting the third face (C) of those which comply with the requirement of perpendicularity, respectively form the projection of the third (C) and first (A) faces of those of the standard units (3) of the adjacent rosettes (4).

2. The die for manufacturing retroreflective material according to claim 1, **characterized in that** of the three faces (A, B and C) which comply with the requirement of perpendicularity to one another, necessary for forming the cube corners (2), two of them, a first face (A) and a second face (B), are symmetrical to one another and have an elongated configuration to form the tip (3a) of the standard unit (3), and the third face (C) is symmetrical in itself and of a smaller size.

3. The die for manufacturing retroreflective material according to claims 1 to 2, **characterized in that** the fourth (D) and fifth (E) faces of the standard unit (3) are triangular and of a smaller size than the first three faces (A, B, C), which are symmetrical and perpendicular to one another.

## Patentansprüche

1. Düse zur Herstellung von rückreflektierendem Material, wie es aus einer mit Würfelecken (2) versehenen Oberfläche gebildet wird, sodass es unter Erhaltung des Parallelismus zwischen dem auftreffenden Strahl und dem reflektierten Strahl Licht reflektiert, wobei diese Würfelecken (2) die Oberfläche der Düse (1) vollständig bedecken, ohne dass ebene Flächenräume zwischen ihnen vorhanden sind oder Flächenräume, die nicht von diesen Würfelecken (2) besetzt sind; wobei der Scheitel (2a) der Würfelecken (2) entlang der Längsachse in Bezug auf die geometrische Mitte zu einer Seite hin versetzt ist; und wobei jede der Würfelecken (2) in einer Standardeinheit (3) integriert ist, die, radial gebündelt in Gruppen unterschiedlicher Anzahl durch Rotation jeder Einheit um die an ihnen vorhandene Spitze (3a), Rosetten (4) bilden, die so neben- und aneinander gekoppelt sind, dass sie die gesamte Oberfläche der Düse (1) bedecken, ohne dass ebene Flächenräume zwischen jeder Würfelecke (2) vorhanden sind, **dadurch gekennzeichnet, dass** die Rosetten (4) durch Bündelung der Standardeinheiten (3) zu sechst mittels der 60°-Rotation jeder einzelnen um die Spitze (3a) gebildet werden; und dass jede Standardeinheit (3) durch einen geometrischen Hohlraum unregelmäßiger, pentagonaler perimetrischer Konfiguration mit fünf Flächen (A, B, C, D, E) gebildet wird, die ebene Oberflächen unterschiedlicher Form und Ausrichtung darstellen, wobei drei von ihnen (A, B und C) diejenigen sind, die die Anforderung der Rechtwinkligkeit zueinander erfüllen, und die vierte (D) und fünfte (E) Fläche, die an die dritte, die Anforderung der Rechtwinkligkeit erfüllende Fläche (C) angrenzen, jeweils den Vorsprung der dritten (C) und ersten (A) Fläche von denen der Standardeinheiten (3) der benachbarten Rosetten (4) bilden.

2. Düse zur Herstellung von rückreflektierendem Material nach Anspruch 1, **dadurch gekennzeichnet, dass** von den drei Flächen (A, B und C), die die Anforderung der für die Bildung der Würfelecken (2) notwendigen Rechtwinkligkeit zueinander erfüllen, zwei, eine erste (A) und eine zweite (B) Fläche, symmetrisch zueinander sind und eine längliche Konfiguration aufweisen, um die Spitze (3a) der Standardeinheit (3) zu bilden, und die dritte Fläche (C) symmetrisch an sich ist und geringere Ausmaße aufweist.

3. Düse zur Herstellung von rückreflektierendem Material nach den Ansprüchen 1 bis 2, **dadurch gekennzeichnet, dass** die vierte (D) und fünfte (E) Fläche der Standardeinheit (3) dreieckig sind und geringere Ausmaße aufweisen als die ersten drei symmetrisch und senkrecht zueinander verlaufenden Flächen (A, B, C).

## Revendications

1. Matrice de formage de matériau rétroréfléchissant, du type formée par une surface pourvue de coins de cube (2), de manière qu'elle réfléchit la lumière en maintenant le parallélisme entre le rayon incident et le rayon réfléchi, où lesdits coins de cube(2) recouvrent la surface de la matrice (1) entièrement sans avoir d'espaces superficielles plats entre eux non occupés par lesdits coins de cube (2); où lesdits coins de cube (2) ont leur sommet (2a) déplacé vers un côté dans leur axe longitudinal par rapport à leur centre géométrique; et où chacun des coins de cube (2) est intégré dans une unité standard (3) qui, radialement regroupés en groupes composés par diverses quantités par le biais de la rotation de chaque unité à la pointe (3a) qu'ils ont, forment des rosettes (4) qui sont couplées de manière attenante entre elles en recouvrant toute la surface de la matrice (1) sans avoir d'espaces plats entre chaque coin de cube (2), **caractérisée en ce que** les rosettes (4) sont formées par le regroupement d'unités standards (3) au nombre de six, par le biais de la rotation de 60° de chacune à la pointe (3a); et **en ce que** chaque unité standard (3) est formée par un creux géométrique avec une configuration périmétrale pentagonale irrégulière avec cinq faces (A, B, C, D, E) qui sont des surfaces plates avec une forme et une orientation différente, trois de celles-ci (A, B et C) étant celles qui respectent l'exigence de perpendicularité entre elles, et la quatrième (D) et la cinquième (E) faces restantes, jouxtant la troisième face (C) de celles qui respectent l'exigence de perpendicularité, forment respectivement la projection de la troisième (C) et la premières (A) faces de celles des unités standards (3) des rosettes attenantes (4).

2. Matrice de formage de matériau rétroréfléchissant selon la revendication 1, **caractérisée en ce que** les trois faces (A, B and C) qui respectent l'exigence de perpendicularité entre elles, nécessaire pour former les coins de cube (2), deux de celles-ci, une première face (A) et une deuxième face (B), sont symétriques entre elles et ont une configuration allongée pour former la pointe (3a) de l'unité standard (3), et la troisième face (C) est symétrique en soi-même et d'une dimension inférieure.

3. Matrice de formage de matériau réfléchissant selon les revendications 1 et 2, **caractérisée en ce que** la quatrième (D) et la cinquième (E) faces de l'unité standard (3) sont triangulaires de dimension inférieure aux trois premières faces (A, B, C), qui sont symétriques et perpendiculaires entre elles.
